# EUROPÄISCHE PATENTSCHRIFT

(11) **EP 2 934 776 B1**
(45) Veröffentlichungstag und Bekanntmachung des Hinweises auf die Patenterteilung: **01.02.2017**
(21) Anmeldenummer: 13834384.3
(22) Anmeldetag: 18.12.2013
(51) Int. Cl.: B08B 15/00, B08B 15/02, G01M 15/02, B25J 9/10

(54) **KRAFTFAHRZEUGPRÜFSTAND**
MOTOR VEHICLE TEST STAND
BANC D'ESSAI DE VÉHICULES AUTOMOBILES

(30) Priorität: 21.12.2012 DE 102012112896
(43) Veröffentlichungstag der Anmeldung: 28.10.2015
(73) Patentinhaber: Dürr Assembly Products GmbH, 66346 Püttlingen (DE)
(72) Erfinder: KOLB, Thomas, 66440 Blieskastel (DE); AREND, Sacha, F-57550 Dalem (FR)
(74) Vertreter: Vièl, Christof
(86) Internationale Anmeldenummer: PCT/DE2013/100433
(87) Internationale Veröffentlichungsnummer: WO 2014/094740

(56) Entgegenhaltungen:
- WO-A1-94/15728
- DE-C1- 4 418 409
- DE-C1- 10 003 626
- GB-A- 2 092 643
- GB-A- 2 346 946
- IT-B- 1 217 016
- US-A- 5 526 989

## Beschreibung

Die Erfindung betrifft einen Kraftfahrzeugprüfstand.

Kraftfahrzeugprüfstände weisen Absaugvorrichtungen für die Abgase der untersuchten Fahrzeuge auf.

Es besteht die Möglichkeit, daß vor jeder Fahrzeugprüfung manuell eine Absaugvorrichtung für die Abgase im Auspuffbereich des untersuchten Fahrzeuges angeordnet wird. Allerdings ist dies mit einem hohen Personalaufwand verbunden und nur bei einem relativ geringen Fahrzeugdurchsatz sinnvoll.

Eine Alternative besteht darin, eine Absaugvorrichtung vorzusehen, die den gesamten hinteren Fahrzeugbereich absaugt und daher eine hohe Saugleistung aufweisen muß, um sicherzustellen, daß ein größtmöglicher Teil der Abgase abgesaugt wird. Häufig sind diese Absaugvorrichtungen im Bodenbereich des Kraftfahrzeugprüfstandes oder in aus diesem ausfahrbaren Klappen angeordnet. Dies ist insofern vorteilhaft, als die Absaugvorrichtung nicht im jeweiligen Auspuffbereich plaziert werden muß und zudem die Absaugvorrichtung nicht die Kontrolle von Aggregaten im Rückbereich des untersuchten Fahrzeuges behindert.

Problematisch ist, daß bis zu einem Drittel des Energieverbrauchs von Kraftfahrzeugprüfständen auf die Absaugvorrichtung für die Abgase entfällt.

Weiterhin stellt sich das Problem, daß im Bereich eines Kraftfahrzeugprüfstandes zahlreiche Bedienelementen, wie ein Bedienpult, ein Eingabeterminal oder eine Lenkradwaage zu einem im Bereich des Kraftfahrzeugprüfstandes, insbesondere einem in einem zu überprüfenden Fahrzeug befindlichen Werker transportiert werden müssen.

Aus der US 5,526,989 A ist ein Verfahren zum Führen einer Schlainmentfemungseinheit innerhalb eines Tanks bekannt, bei der mehrere Windevorrichtungen an unterschiedlichen Stellen innerhalb des Tanks angeordnet sind, mittels derer die Schlammentfernungseinheit innerhalb des Tanks positioniert wird.

Die GB 2 092 643 A beschreibt eine Baggerpumpe mit einer im Wesentlichen kreisförmige Saugkamrrier, die an Kabeln an einem verfahrbaren Wagen angeordnet ist.

Aus der WO 94/15728 A1 ist eine Vorrichtung zum Reinigen der Wand eines Silos bekannt, bei der eine Druckluftpistole an zwei Kabeln an Windevorrichtungen aufgehängt ist, die an einem Chassis angeordnet sind, welches über eine drehbare Platte kreisförmig verfahrbar ist.

Die DE 4418 409 C1 beschreibt eine rechnergesteuerte Absaugvomichtung für Rottehallen mit einer oder mehreren Hauptsammelleitungen, die mit einem oder mehreren Absaugmodulen über jeweils einen flexiblen Schlauch in Verbindung stehen, wobei ein Absaugmodul ein oder mehrere Absaughauben aufweist, die Hauptsammelleitungen am Ansatz eines flexiblen Schlauchs eine Drosselklappe aufweisen, die Module über Hubzüge verstellbar sind und die Hauptsammelleitungen mit einem Abluftventilator verbunden sind.

Aus der GB 2 346 946 A ist ein flexibler verstärkter Schlauch bekannt, wobei der Schlauch durch ein äußeres thermoplastisches spiralenförmiges Element versteift wird.

Die DE 100 03 626 C1 beschreibt eine Vorrichtung zum Absaugen von Autoabgasen mit einem längs einer eckenseitigen Fahrschiene motorisch angeordneten Fahrgestell mit einem Gebläse, an dessen Saugseite ein Schlauch angeschlossen ist, der im Auspuffbereich mündet.

Die Äufgabe der Erfindung besteht darin, die Energieeffizienz von Kraftfahrzeugprüfständen zu erhöhen und das Handling für das Bedienpersonal zu erleichtern.

Diese Aufgabe wird dadurch gelöst, daß eine Absaugvorrichtung oder ein Bedienelement an mindestens zwei Seilen geführt ist, die an zwei voneinander beabstandeten Anlenkpunkten oberhalb des Kraftfahrzeugprüfstandes angelenkt sind, wobei jedes der Seile mit einem Antrieb verbunden ist.

Diese Vorrichtung ermöglicht es, durch Ablassen oder Anziehen der Seile jeden Punkt innerhalb einer x-y-Ebene anzusteuern und auf diese Weise die an den Seilen geführte Absaugvorrichtung im Bereich des jeweiligen Auspuffs zu plazieren. Wird das rückwärtige Fahrzeugende immer auf einer festgelegten Linie positioniert, ist diese zweidimensionale Ausgestaltung der Erfindung ausreichend, um den jeweiligen Auspuff anzufahren. Bei der erfindungsgemäßen Vorrichtung ist eine deutlich geringere Saugleitung - und somit ein deutlich geringerer Energiebedarf - erforderlich, um eine vergleichbare Luftqualität zu erreichen wie bei in den Boden des Kraftfahrzeugprüfstandes integrierten Absauganlagen. Da die Abgasabsaugvorrichtung weder im Bereich der Prüfstandsabdeckung noch im Bereich der Fahrbahn angeordnet wird, ergibt sich ein deutlich vergrößerter Freiraum für andere Einrichtungen, z.B. Komponenten zur Überprüfung bzw. Einstellung von Fahrerassisterizsystemen. Zudem paßt sich die erfindungsgeniäße Absaugvorrichtung für die Abgase dem jeweiligen Fahrzeug-Überhang an, was bei den bekannten Vorrichtungen nicht der Fall ist.

Es versteht sich, daß, nicht erfindungsgemäss, statt der Seile auch Drähte oder andere vergleichbare Elemente verwendet werden können.

Hierdurch ist es möglich, die erfindungsgemäße Vorrichtung zum Zuführen von Bedienelementen, wie einem Bedienpult, einem Eingabeterminal, einer Lenkradwaage zu einem im Bereich des Kraftfahrzeugprüfstandes, insbesondere einem in einem zu überprüfenden Fahrzeug befindlichen Werker zu verwenden. Diese Art des Zuführens ist ergonomisch und flexibel und erfordert nur eine relativ einfache Sicherheitstechnik. Sie ist insofern vorteilhaft, als die Zuführvorrichtung nicht im Ein- und Ausstiegsbereich des zu überprüfenden Fahrzeuges angeordnet ist.

Eine Weiterbildung der Erfindung besteht darin, daß die Absaugvorrichtung bzw. das Bedienelement an drei Seilen geführt ist, die an drei voneinander beabstandeten Anlenkpunkten oberhalb des Kraftfahrzeugprüfstandes angelenkt sind, wobei jedes der Seile mit einem Antrieb verbunden ist.

Hierdurch wird ermöglicht, durch Ablassen öder Anziehen der Seile jeden Punkt in einem x-y-z-Raum anzusteuern und auf diese Weise die an den Seilen geführte Absaugvorrichtung im Bereich des jeweiligen Auspuffs zu plazieren. Bei dieser Ausgestaltung, die ein Anfahren von Auspuffpositionen im dreidimensionalen Raum ermöglicht, kann die zeitaufwändige Positionierung des rückwärtigen Bereichs auf einer festgelegten Linie entfallen. Für Bedienelemente gilt entsprechende: Auch das Bedienelement kann an jedem Punkt in einem x-y-z-Raum positioniert werden, beispielsweise in Reichweite eines im Cockpit sitzenden Werkers bzw. eines im Bereich des Fahrzeuges stehenden Werkers.

Es ist zur Erfindung gehörig, daß eine Steuerung vorgesehen ist, über die die Antriebe der Seile individuell ansteuerbar sind.

In diesem Zusammenhand ist es vorteilhaft, daß bei Führung eines Absaugelementes an den Seilen ein mit der Steuerung verbundener Speicher vorgesehen ist, in dem Auspuffpositionen von zu untersuchenden Fahrzeugen gespeichert sind.

Da die Fahrzeuge jeweils in im Wesentlichen gleicher Weise innerhalb des Kraftfahrzeugprüfstandes positioniert sind, kann über den Speicher die jeweilige Auspuffposition abgerufen und mittels der Steuerung angefahren werden. Entsprechendes gilt für das Anfahren einer anderen Position innerhalb des Kraftfahrzeugprüfstandes für die Bereitstellung eines Bedienelementes.

Alternativ oder zusätzlich ist es auch möglich, daß optische Detektionsmittel zum Erkennen der jeweiligen Auspuffposition des zu untersuchenden Fahrzeuges vorgesehen sind. Entsprechendes gilt für das Detektieren einer anderen Position innerhalb des Kraftfahrzeugprüfstandes für die Bereitstellung eines Bedienelementes.

Nachfolgend wird ein Ausführungsbeispiel der Erfindung anhand einer Zeichnung näher erläutert.

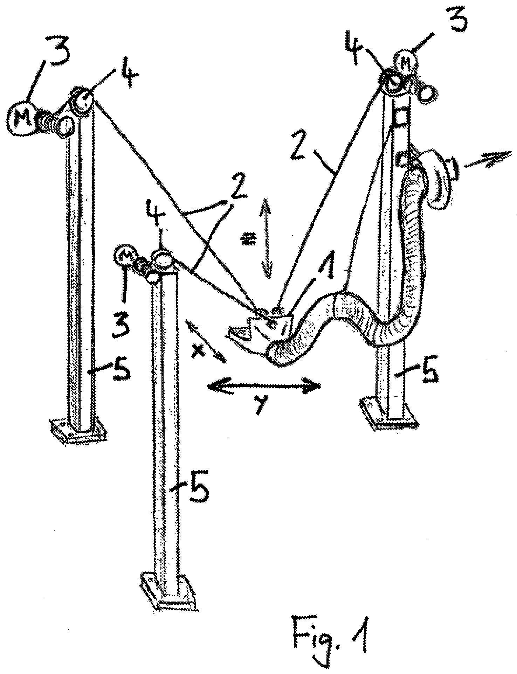

Es zeigt
- Fig. 1: eine perspektivische Ansicht einer erfindungsgemäßen Vorrichtung zum Positionieren einer Absaugvorrichtung an einem Fahrzeugprüfstand.

Wie aus Fig. 1 ersichtlich, ist die erfindungsgemäße Absaugvorrichtung 1 für einen Kraftfahrzeugprüfstand an mindestens zwei, im gezeigten Beispiel an drei Seilen 2 geführt, die an drei voneinander beabstandeten Anlenkpunkten oberhalb des Kraftfahrzeugprüfstandes angelenkt sind, wobei jedes der Seile 2 mit einem Antrieb 3 verbunden ist und über eine Rolle 4 läuft.

Im vorliegenden Beispiel sind die Seile 2 auf Pfosten 5 angeordnet, die auf den Eckpunkten eines rechtwinkligen Dreiecks angeordnet sind. Es ist jedoch auch möglich, die Pfosten 5 anders anzuordnen oder die Anlenkpunkte der Seile 3 anderweitig zu befestigen, beispielsweise an einer bestehenden Stahlkonstruktion.

Es ist eine Steuerung vorgesehen ist, über die die Antriebe 3 der Seile 2 individuell ansteuerbar sind. Damit kann mit der Absaugvorrichtung 1 jede Position innerhalb eines x-y-z-Raumes angefahren werden.

Ist zudem ein mit der Steuerung verbundener Speicher vorgesehen, in dem die Auspuffpositionen der zu untersuchenden Fahrzeuge gespeichert sind, kann - wenn man davon ausgeht, daß das jeweilige Fahrzeug immer an der gleichen Position innerhalb des Kraftfahrzeugprüfstandes angeordnet ist - die jeweilige Auspuffposition automatisch angefahren werden.

Alternativ oder zusätzlich ist es möglich, daß optische Detektionsmittel zum Erkennen der jeweiligen Auspuffposition des zu untersuchenden Fahrzeuges vorgesehen sind. Dies kann beispielsweise eine CCD-Kamera sein.

## Patentansprüche

1. Kraftfährzeugprüfstand, wobei eine Absaugvorrichtung (1) oder ein Bedienelement an mindestens zwei Seilen (2) geführt ist, die an zwei voneinander beabstandeten Anlenkpunkten oberhalb des Kraftfahrzeugprüfstandes angelenkt sind, wobei jedes der Seile (2) mit einem Antrieb (3) verbunden ist.

2. Kraftfahrzeugprüfstand gemäß Anspruch 1, wobei die Absaugvorrichtung (1) bzw. das Bedienelement an drei Seilen (2) geführt ist, die an drei voneinander beabstandeten Anlenkpunkten oberhalb des Kraftfahrzeugprüfstandes angelenkt sind, wobei jedes der Seile (2) mit einem Antrieb (3) verbunden ist.

3. Kraftfahizeugprüfstand gemäß Anspruch 1, wobei eine Steuerung vorgesehen ist, über die die Antriebe (3) der Seile (2) individuell ansteuerbar sind.

4. Kraftfahrzeugprüfstand gemäß Anspruch 3, wobei bei Führung eines Absaugelementes an den Seilen ein mit der Steuerung verbundener Speicher vorgesehen ist, in dem Auspuffpositionen von zu untersuchenden Fahrzeugen gespeichert sind.

5. Kraftfahrzeugprüfstand gemäß Anspruch 1 oder Anspruch 2, wobei bei Führung eines Absaugelementes an den Seilen optische Detektionsmittel zum Erkennen von Auspuffpositionen von zu untersuchenden Fahrzeugen vorgesehen sind.

6. Kraftfahrzeugprüfstand gemäß Anspruch 1 oder Anspruch 2, wobei optische Detektionsmittel zum Erkennen einer Auspuffposition eines zu untersuchenden Fahrzeuges bzw. einer anderen Position innerhalb des Kraftfahrzeugprüfstandes für die Bereitstellung eines Bedienelementes vorgesehen sind.

## Claims

1. Motor vehicle test stand, wherein a suction device (1) or a control element is guided on at least two cables (2) movably attached to two attachment points spaced apart from one another above the motor vehicle test stand, each of the cables (2) being connected to a drive (3).

2. Motor vehicle test stand, wherein a suction device (1) or a control element is guided on at least two cables (2) movably attached to three attachment points spaced apart from one another above the motor vehicle test stand, each of the cables (2) being connected to a drive (3).

3. Motor vehicle test stand according to claim 1, wherein a control means is provided via which the drives (3) for the cables (2) can be activated individually.

4. Motor vehicle test stand according to claim 3, wherein, in the case of a suction element being guided on the cables, a memory connected to the control means is provided, in which exhaust-pipe positions of vehicles to be tested are stored.

5. Motor vehicle test stand according to claim 1 or claim 2, wherein, in the case of a suction element being guided on the cables, optical detection means are provided for identifying exhaust-pipe positions of vehicles to be tested.

6. Motor vehicle test stand according to claim 1 or claim 2, wherein optical detection means are provided for identifying an exhaust-pipe position of a vehicle to be tested or another position, to which a control element is to be supplied, within the motor vehicle test stand.

## Revendications

1. Banc d'essai de véhicules automobiles, dans lequel un dispositif d'aspiration (1) ou un élément de manoeuvre est guidé par au moins deux câbles (2) qui sont articulés sur deux points d'articulation espacés l'un de l'autre au-dessus du banc d'essai de véhicule automobiles, chacun des câbles (2) étant relié à un entraînement (3).

2. Banc d'essai de véhicules automobiles selon la revendication 1, dans lequel le dispositif d'aspiration (1) ou l'élément de manoeuvre est guidé par trois câbles (2) qui sont articulés sur trois points d'articulation espacés les uns des autres au-dessus du banc d'essai de véhicule automobiles, chacun des câbles (2) étant relié à un entraînement (3).

3. Banc d'essai de véhicules automobiles selon la revendication 1, dans lequel il est prévu une commande au moyen de laquelle les entraînements (3) des câbles (2) peuvent être commandés individuellement.

4. Banc d'essai de véhicules automobiles selon la revendication 3, dans lequel, en cas du guidage d'un élément d'aspiration par les câbles, il est prévu une mémoire reliée à la commande dans laquelle sont mémorisées des positions de pots d'échappement de véhicules à contrôler.

5. Banc d'essai de véhicules automobiles selon la revendication 1 ou 2, dans lequel, en cas de guidage d'un élément d'aspiration par les câbles, des moyens de détections optiques sont prévus pour reconnaître des positions de pots d'échappement de véhicules à contrôler.

6. Banc d'essai de véhicules automobiles selon la revendication 1 ou 2, dans lequel des moyens de détection optiques sont prévus pour reconnaître une position de pot d'échappement d'un véhicule à contrôler ou une autre position à l'intérieur du banc d'essai de véhicules automobiles pour la mise à disposition d'un élément de manoeuvre.
